(19) Europäisches Patentamt
European Patent Office
Office européen des brevets

(11) **EP 3 092 389 B1**

(12) **FASCICULE DE BREVET EUROPEEN**

(45) Date de publication et mention de la délivrance du brevet:
**01.07.2020 Bulletin 2020/27**

(21) Numéro de dépôt: **14827838.5**

(22) Date de dépôt: **15.12.2014**

(51) Int Cl.:
*F02C 7/275* *(2006.01)*      *F02C 7/26* *(2006.01)*
*F02C 7/268* *(2006.01)*

(86) Numéro de dépôt international:
**PCT/FR2014/053334**

(87) Numéro de publication internationale:
**WO 2015/097361 (02.07.2015 Gazette 2015/26)**

(54) **PROCÈDE ET SYSTÈME DE DÉMARRAGE FIABILISÉ DE TURBOMACHINE**

VERFAHREN UND SYSTEM ZUM ZUVERLÄSSIGEREN STARTEN EINER TURBOMASCHINE

METHOD AND SYSTEM FOR MORE RELIABLE STARTING OF A TURBO MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2013 FR 1363458**

(43) Date de publication de la demande:
**16.11.2016 Bulletin 2016/46**

(73) Titulaire: **Safran Helicopter Engines**
**64510 Bordes (FR)**

(72) Inventeurs:
• **POUMAREDE, Vincent**
**F-65000 Tarbes (FR)**
• **HARRIET, Pierre**
**F-64140 Billere (FR)**

(74) Mandataire: **Cabinet Beau de Loménie**
**158, rue de l'Université**
**75340 Paris Cedex 07 (FR)**

(56) Documents cités:
EP-A1- 2 264 297      FR-A1- 2 964 515
GB-A- 740 090      US-A- 2 938 338
US-A- 3 600 887      US-A- 6 147 414
US-A1- 2006 061 336

**Description**

Domaine technique et état de l'art antérieur

L'invention concerne un procédé et un système de démarrage fiabilisé d'une turbomachine.

Le domaine d'application de l'invention est plus particulièrement celui de la commande du démarrage de moteurs aéronautiques de propulsion à turbine à gaz, tels que des turbomoteurs d'hélicoptère ou des turbopropulseurs d'aéronefs à aile fixe, ou de la commande du démarrage pour des groupes auxiliaires de puissance ou APU (« Auxiliary Power Unit ») à turbine à gaz montés sur des aéronefs.

L'invention est toutefois applicable à d'autres types de turbomachines, par exemple des turbines industrielles.

Un turbomoteur d'aéronef comprend de manière connue une chambre de combustion, un arbre de compresseur sur lequel est montée une roue de compresseur pour alimenter en air comprimé ladite chambre de combustion et au moins un démarreur ou un démarreur-générateur relié audit arbre de manière à lui fournir le couple de démarrage suffisant pour l'entraîner en rotation.

Pour démarrer le turbomoteur, le démarreur accélère tout d'abord l'arbre de compresseur dans une première phase de démarrage pendant laquelle le circuit carburant en amont des injecteurs de démarrage est mis en pression et purgé. Puis, dans une deuxième phase de démarrage, une injection de combustible est initiée avant que l'allumage dudit combustible ne soit réalisé dans la chambre de combustion du turbomoteur. Enfin, dans une troisième phase de démarrage, à une vitesse de rotation prédéfinie, l'action du démarreur est arrêtée et le turbomoteur peut continuer d'accélérer grâce à la combustion dudit combustible.

Pour permettre l'allumage du combustible, l'air fourni par la roue de compresseur à la chambre de combustion doit respecter certaines conditions de pression et de vitesse au niveau des injecteurs de combustible, de manière à garantir un ratio carburant / air précis et à ne pas souffler la flamme. Or, le volume d'air fourni par la roue de compresseur à la chambre de combustion étant proportionnel à la vitesse de rotation de l'arbre de compresseur, la vitesse de rotation de l'arbre du générateur de gaz doit donc être comprise dans un intervalle de vitesse, appelé fenêtre d'allumage, et ce pendant un temps suffisamment long pour que l'allumage soit réalisé correctement.

Traditionnellement, les turbomoteurs de la quasi-totalité des hélicoptères légers ou moyens, et même ceux de certains hélicoptères lourds ainsi que de nombreux turbopropulseurs d'avions légers à aile fixe, sont démarrés à l'aide d'un démarreur ou d'un démarreur-générateur à courant continu alimenté sous une tension continue de 28V.

Les principaux avantages des démarreurs à courant continu résident dans le fait qu'il s'agit de machines électriques robustes de conception relativement simple et maîtrisée, disponibles sur étagère, et qu'ils peuvent être utilisés pour démarrer un turbomoteur directement depuis une source de tension de 28V , par exemple la batterie de l'hélicoptère, sans nécessiter de convertisseur statique, ni de stratégie de pilotage complexe.

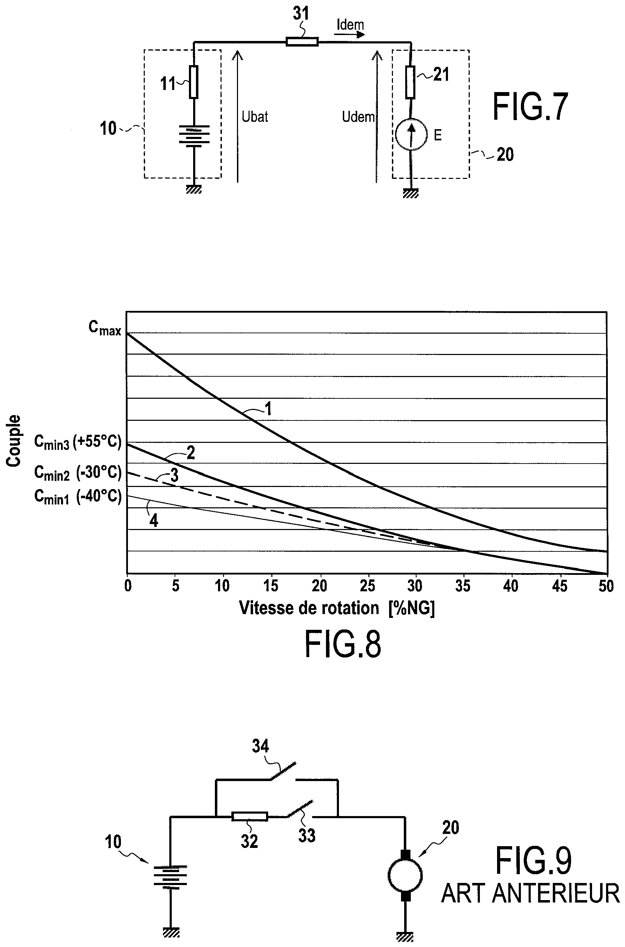

Cependant, leur mise en œuvre pratique se heurte à des difficultés, qui seront explicitées en référence à la Figure 7 et que les équations de base rappelées ci-dessous permettent de mieux comprendre.

Si l'on définit différents paramètres comme suit :

Uo : tension de la batterie 10 à vide,
Rbat : valeur de la résistance interne 11 de la batterie 10,
Rcab : valeur de la résistance du câblage 31,
Rind : valeur de la résistance 21 de l'enroulement d'induit du démarreur 20,
E = E(N): force contre-électromotrice (fcém) du démarreur 20,
Idem : courant d'induit de démarrage,
Ubat : tension aux bornes de la batterie 10,
Udem : tension aux bornes du démarreur 20,

On a :

$$Idem = (Ubat - Udem) / Rcab = (Uo - E(N)) / (Rbat + Rcab + Rind)$$

Avec : E(N) = k x N, N étant la vitesse de rotation du démarreur 20 et k une constante électrique du démarreur 20 (qui dépend notamment du bobinage).

D'autre part, le couple électromagnétique du démarreur 20 s'exprime par : Cem = k x Idem x Iex, Iex étant le courant d'excitation (Iex = Idem pour un démarreur à excitation série, Iex pouvant également être régulé de manière indépendante par une unité de régulation générateur ou GCU (« Generator Control Unit ») pour les machines à excitation séparée).

On déduit que, à N = 0, E = 0 et donc :

$$\text{Idem} = \text{Uo} / (\text{Rbat} + \text{Rcab} + \text{Rind})$$

On voit que le courant d'induit Idem, lors des premiers instants du démarrage, c'est-à-dire lorsque la fcém du démarreur 20 est encore très faible, est directement proportionnel à la tension à vide Uo de la batterie 10 et uniquement limité par la résistance totale (Rbat + Rcab + Rind) de la ligne d'alimentation. Or, la tension d'alimentation (prévue par exemple pour être de 28V dans des conditions nominales) peut varier notablement selon qu'il s'agit d'un démarrage depuis la batterie ou un groupe de parc. D'autre part, la résistance interne de la batterie Rbat augmente à basse température. Les valeurs des résistances des conducteurs électriques Rcab, Rind, quant à elles, augmentent lorsque la température augmente.

On comprend donc que le courant et par conséquent le couple de début de démarrage peuvent varier considérablement en fonction du type d'alimentation fournissant une tension de par exemple 28V (batterie, démarreur-générateur de l'autre turbine, groupe auxiliaire de puissance de l'aéronef ou groupe de parc utilisé pour les démarrages au sol), des conditions ambiantes (température) et des circonstances (démarreur chaud ou froid).

En pratique, l'avionneur limite le courant de démarrage en utilisant une section de câble adaptée (offrant une valeur minimale de résistance), voire en rajoutant en série une résistance de démarrage qui est shuntée après quelques instants comme on l'expliquera plus loin.

D'un autre côté, le couple résistant du générateur de gaz et du relais de transmission associé est lui aussi très variable, en fonction notamment des paramètres de pression et de température de l'atmosphère P0, T0 (liés à la densité de l'air) et de la température d'huile (liée aux frottements dans le relais de transmission qui comprend essentiellement un réducteur, sur lequel sont montés des équipements accessoires, tels que pompes, alternateur, démarreur, etc...).

Le couple minimum de démarrage spécifié est d'autant plus élevé que la température est basse, comme on peut le voir sur la figure 8 qui représente des courbes 1 à 4 donnant l'évolution du couple en fonction de la vitesse de rotation exprimée en pourcentage de la valeur nominale NG de la vitesse de rotation du générateur de gaz, pour respectivement un couple maximal Cmax, un couple minimum Cmin1 à -40°C, un couple minimum Cmin2 à -30°C et un couple minimum Cmin3 à +55°C.

Ceci conduit souvent l'avionneur à sur-dimensionner son circuit de puissance de démarrage pour minimiser l'impédance du câblage Rcab et fournir un couple suffisant à très basse température, au sol et sur batterie(s). Par conséquent, lors d'un démarrage sur groupe de parc (rarement normalisé, avec une tension souvent élevée), en altitude (avec un couple résistant du compresseur qui est faible) ou avec un turbomoteur déjà chaud (avec des frottements faibles), on peut se retrouver avec un couple de démarrage très élevé - supérieur à la valeur maximale spécifiée Cmax - et un couple résistant faible, provoquant une accélération importante du générateur de gaz qui traverse dès lors trop rapidement la fenêtre d'allumage.

On sait par ailleurs que certaines turbomachines se caractérisent par une fenêtre d'allumage basse et relativement étroite, comprise entre 8%NG et 15%NG environ, où NG est la vitesse nominale du générateur de gaz, 100%NG correspondant approximativement à la vitesse de rotation de l'arbre de compresseur lorsque le turbomoteur fonctionne à un régime permettant de fournir la Puissance Maximale de Décollage (PMD): en dehors de ces limites, la chambre ne peut pas s'allumer.

D'autre part, la fréquence de claquage des bougies d'allumage de la chambre de combustion est généralement très faible, de l'ordre de quelques Hertz : le nombre d'étincelles et donc les probabilités d'allumage sont d'autant plus faibles que le générateur de gaz reste peu de temps dans la fenêtre d'allumage.

Un autre facteur difficile à prendre en compte est la durée variable de remplissage en carburant des rampes d'injection associées à la chambre de combustion, qui peut être à l'origine d'un délai entre l'instant d'ouverture des clapets et l'arrivée effective du carburant dans la chambre.

Enfin, une fois les injecteurs de démarrage allumés, la durée de propagation de la flamme aux injecteurs adjacents est également un phénomène complexe actuellement mal maîtrisé, qui nécessite une vitesse d'air pas trop élevée.

Pour toutes ces raisons, il est donc important de ne pas traverser trop vite la fenêtre d'allumage et d'y rester pendant une durée minimale afin d'être sûr d'allumer la chambre dans de bonnes conditions et de stabiliser la flamme.

On voit donc qu'un couple de démarrage mal maîtrisé et trop élevé peut conduire à passer trop rapidement dans la fenêtre d'allumage et à rater des démarrages.

Or, on a vu que les démarreurs-générateurs et démarreurs 28V actuels, non pilotés, ne peuvent que difficilement tenir les spécifications contradictoires de couple minimum/couple maximum dans la totalité des situations possibles.

Un système permettant de rendre plus robuste l'allumage et le démarrage des turbomoteurs est donc souhaitable.

Pour cela on a déjà proposé d'incorporer une résistance de démarrage, comme illustré sur la figure 9 : pour limiter le courant de démarrage, on introduit en série avec la batterie 10 une résistance 32 de valeur Rdem en série avec un interrupteur 33 (ce qui crée une chute de tension et permet donc de limiter le courant lorsque la fcém du démarreur 20 est faible). La résistance 32 est court-circuitée au-dessus d'un certain seuil de vitesse par la fermeture d'un interrupteur 34. Toutefois, la résistance de démarrage permet seulement de diminuer l'accélération du générateur de gaz dans les circonstances où le couple du démarreur serait trop élevé (tension batterie élevée, résistances faibles, moteur chaud, etc...).

Dans les autres cas, notamment lorsque le couple résistant est élevé ou la tension d'alimentation faible (batterie froide), la limitation du courant de démarrage n'est pas nécessaire, et peut même être potentiellement handicapante.

D'autre part, la résistance de démarrage dissipe une puissance très élevée (1 à 3 kW); elle est donc complexe à fabriquer et elle doit être installée dans un endroit où les pertes par effet joule pourront être facilement évacuées et ne chaufferont pas trop le matériel environnant. Enfin, l'énergie perdue dans la résistance conduit à sur-dimensionner la batterie.

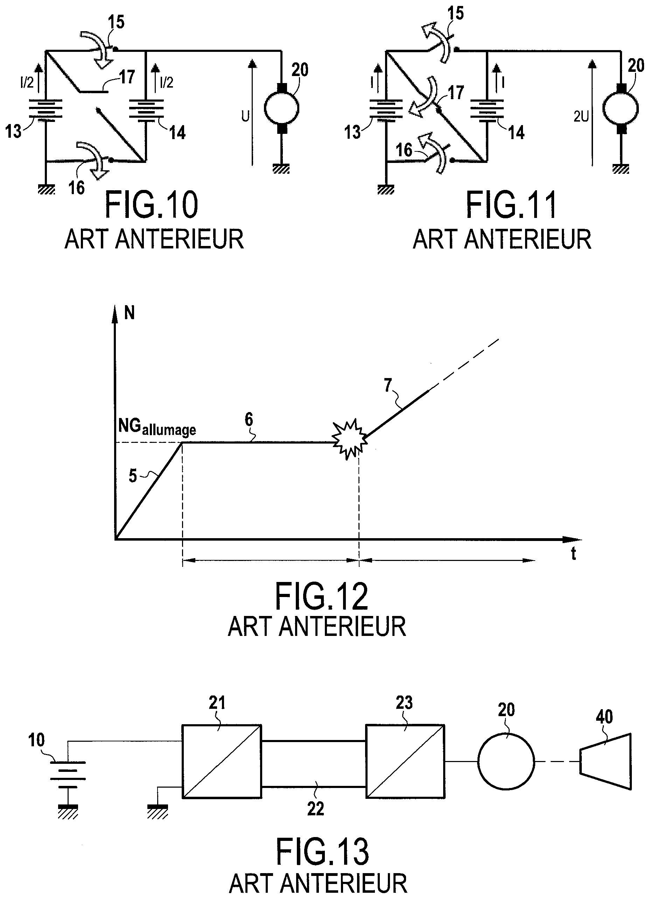

On a également proposé d'effectuer un démarrage série/parallèle, comme illustré sur les figures 10 et 11. Cette solution est utilisée sur certains turbopropulseurs démarrés sur batterie 28V. Elle nécessite deux batteries 13 et 14. Au début du démarrage et en-dessous d'un seuil de vitesse (ou de courant), les batteries 13 et 14 sont connectées en parallèle, comme illustré sur la figure 10, où deux interrupteurs 15 et 16 sont fermés, tandis qu'un interrupteur 17 est ouvert. Le démarreur 20 est donc alimenté à une tension U égale à 28V, et les batteries 13, 14 se partagent le courant élevé de démarrage, un courant I/2 circulant dans chacune des batteries 13 et 14.

Au-dessus d'un seuil de vitesse, lorsque la fcém du démarreur 20 a suffisamment augmenté pour limiter le courant, les batteries 13 et 14 sont reconnectées en série, comme illustré sur la figure 11, où les deux interrupteurs 15 et 16 sont ouverts, tandis que l'interrupteur 17 est fermé. Un courant I circule donc dans chacune des batteries 13 et 14. Le démarreur 20 est alors alimenté en une tension double 2U égale à 56V dans l'exemple considéré, ce qui permet d'augmenter la vitesse maximale d'assistance sans défluxage du démarreur 20.

Le démarrage série/parallèle nécessite deux batteries 28V, alors que les hélicoptères n'en ont généralement qu'une seule (sauf « kit temps froid »), et un démarreur à courant continu dimensionné pour une tension nominale de 56V. Les démarreurs-générateurs et démarreurs 28V disponibles sur étagère ne sont pas tous dimensionnés pour cette tension en usage répété. D'autre part, la problématique de l'accélération trop rapide dans la fenêtre d'allumage n'est pas traitée, le but de ce montage étant plutôt de continuer à assister l'accélération du générateur de gaz à haute vitesse (donc avec une fcém élevée) sans défluxage du démarreur.

On a également proposé d'effectuer une optimisation de la séquence (et de la phase) de démarrage pilotée par le calculateur. Il s'agit d'entraîner et de stabiliser la vitesse de rotation de l'arbre du générateur de gaz dans la fenêtre d'allumage préférentielle puis, une fois l'allumage constaté (par exemple par détection d'une augmentation du T45, c'est-à-dire de la température des gaz à l'entrée de la turbine libre), de contrôler l'accélération de façon optimale. Le diagramme de la figure 12 illustre ce procédé et montre une vitesse de rotation croissante en fonction du temps (tronçon 5), puis une vitesse de rotation constante NGallumage pouvant varier dans une plage comprise entre 8%NG et 15%NG (tronçon 6), où NG représente une vitesse de rotation nominale du générateur de gaz, puis après une détection d'allumage effectuée par exemple avec la détection d'une augmentation de la température des gaz à l'entrée de la turbine libre (T45), une vitesse de rotation à nouveau croissante en fonction du temps (tronçon 7). Le tronçon 6 correspond ainsi à un maintien de la vitesse de rotation à une valeur à peu près constante dans la fenêtre d'allumage, tandis que le tronçon 7 correspond à une accélération à peu près constante.

Les documents WO2011/0563960 et CA 2 685 514 décrivent également des lois de démarrage piloté de turbomachines. Les documents GB 740 090 A, FR 2 964 515 A1, US 2 938 338 A et US 6 147 414 A décrivent aussi des systèmes de l'art antérieur.

Le document US 20100283242 décrit, comme illustré sur la figure 13, l'architecture électrique d'un dispositif destiné au démarrage d'un turbopropulseur 40 utilisant un démarreur alternatif 20 alimenté par un convertisseur contrôlé continu-alternatif (DC/AC) 23, qui permet donc de contrôler l'accélération du générateur de gaz. Le convertisseur contrôlé continu-alternatif (DC/AC) 23 est lui-même alimenté depuis une batterie 10 de 28V par l'intermédiaire d'un convertisseur continu-continu (DC/DC) 21 élévateur de tension et d'un bus continu 22. Une architecture assez similaire, basée sur une mise en cascade de convertisseurs continu-continu (DC/DC) et continu-alternatif (DC/AC) dimensionnés pour la pleine puissance de démarrage, est décrite dans le document de brevet US5493201.

On peut noter que le démarrage dit « optimisé » mentionné ci-dessus, ainsi que selon les variantes identifiées dans les différents documents de brevet susmentionnés, lorsqu'il est appliqué dans sa totalité, c'est-à-dire avec le contrôle de l'accélération du générateur de gaz après l'allumage, ne peut être mis en œuvre qu'avec des technologies de démarreur particulières (machine synchrone à excitation bobinée par exemple), le démarreur devant en outre disposer d'une électronique de puissance et de commande (onduleur) permettant le pilotage en vitesse et en couple dimensionnée pour la puissance maximale du démarreur, qui peut atteindre brièvement des niveaux considérables (de 10kW à 20kW). Cette électronique de puissance est donc particulièrement lourde et coûteuse.

Les architectures de puissance utilisant des démarreurs en courant alternatif « haute tension » nécessitent non seulement une machine tournante spécifique et un convertisseur continu-alternatif (DC/AC) dimensionné pour la pleine puissance, mais en plus un hacheur continu-continu (DC/DC) pour élever la tension du réseau 28V au niveau de la tension du bus continu (quelques centaines de volts). C'est donc dans tous les cas une solution particulièrement lourde, complexe et coûteuse.

Définition et objet de l'invention

L'invention vise à remédier aux inconvénients précités et à permettre notamment d'éviter de sur-dimensionner les batteries d'alimentation électrique, tout en améliorant la fiabilité du démarrage et en rendant plus robuste l'allumage et le démarrage de turbomoteurs.

Pour résoudre les problèmes mentionnés ci-dessus, il est proposé un système de démarrage fiabilisé d'une turbomachine comprenant une batterie d'accumulateurs, un démarreur à courant continu, un calculateur électronique de régulation, un relais de transmission (permettant notamment l'entraînement mécanique du générateur de gaz et de pompes à carburant par le démarreur), des accessoires de démarrage (tels que bougies d'allumage, électro-clapets de démarrage et/ou d'arrêt) chargés de gérer une distribution de combustible à des injecteurs et un allumage de ce combustible pendant une phase de démarrage, un générateur de gaz comprenant lui-même un compresseur, une chambre de combustion et une turbine haute pression, une turbine libre (destinée à entraîner par exemple un rotor d'hélicoptère ou une hélice de turbopropulseur par l'intermédiaire d'un réducteur mécanique), caractérisé en ce que le système comprend en outre des premier et deuxième circuits montés en parallèle et interposés entre ladite batterie d'accumulateurs et ledit démarreur à courant continu, en ce que le premier circuit comprend un convertisseur continu-continu monté en série avec un premier interrupteur et le deuxième circuit comprend un deuxième interrupteur, en ce qu'il comprend en outre au moins un capteur de la vitesse de rotation du compresseur, un capteur de la température à l'entrée de la turbine libre et un circuit de commande desdits premier et deuxième interrupteurs en fonction des informations fournies par ledit capteur de la vitesse de rotation du compresseur et par ledit capteur de la température à l'entrée de la turbine libre.

De préférence, le système comprend en outre une diode montée dans le premier circuit en série avec le convertisseur continu-continu et le premier interrupteur.

Selon un mode de réalisation particulier, le démarreur à courant continu est du type démarreur-générateur, ce qui permet, au-dessus d'un seuil de vitesse du générateur de gaz, de commuter ce démarreur-générateur en mode générateur de manière à alimenter par exemple un réseau de bord d'un aéronef dans lequel est installée la turbomachine.

Selon un mode de réalisation particulier, le système de démarrage comprend en outre un capteur de la vitesse de rotation du démarreur à courant continu et le convertisseur continu-continu est asservi par ledit capteur de la vitesse de rotation du démarreur à courant continu lorsque ledit premier interrupteur est fermé.

Dans ce cas, le calculateur électronique de régulation peut comprendre une unité d'élaboration d'une consigne de vitesse Nref correspondant à une fenêtre d'allumage préférentielle de la turbomachine et une liaison de transmission de cette consigne de vitesse Nref au convertisseur continu-continu.

Selon un autre mode de réalisation particulier, le convertisseur continu-continu est asservi par ledit capteur de la vitesse de rotation du compresseur lorsque ledit premier interrupteur est fermé.

Dans ce cas, le calculateur électronique de régulation peut comprendre une unité d'élaboration d'une consigne de vitesse Nref correspondant à une fenêtre d'allumage préférentielle de la turbomachine, et une unité d'élaboration d'une consigne de couple du démarreur Cref et une liaison de transmission de cette consigne de couple Cref au convertisseur continu-continu.

A titre d'exemple, le convertisseur continu-continu peut comprendre un filtre de compatibilité électromagnétique, un circuit de précharge et un hacheur dévolteur de type Buck.

De façon plus particulière, le calculateur électronique de régulation comprend une unité d'élaboration de signaux logiques SL1, SL2 appliqués à une unité de gestion de réseau de bord d'un hélicoptère pour commander l'actionnement respectivement des premier et deuxième interrupteurs.

Le calculateur électronique de régulation comprend une unité de détection du dépassement d'un seuil prédéterminé de la vitesse de rotation NG du compresseur et de commande de désactivation des premier et deuxième interrupteurs ainsi que de désactivation desdits accessoires de démarrage.

Selon un aspect de l'invention, le circuit de commande du convertisseur continu-continu comprend à la fois une boucle d'asservissement de vitesse et une boucle d'asservissement de courant.

La boucle d'asservissement de vitesse et la boucle d'asservissement de courant peuvent être incorporées dans un circuit indépendant de contrôle du convertisseur continu-continu.

Selon une variante de réalisation, la boucle d'asservissement de vitesse est incorporée dans le calculateur électronique de régulation et la boucle d'asservissement de courant est incorporée dans un circuit indépendant de contrôle du convertisseur continu-continu.

L'invention concerne également un procédé de démarrage fiabilisé d'une turbomachine comprenant une batterie d'accumulateurs, un démarreur à courant continu, un calculateur électronique de régulation, un relais de transmission, des accessoires de démarrage chargés de gérer une distribution de combustible à des injecteurs et un allumage de ce combustible pendant une phase de démarrage, un générateur de gaz comprenant lui-même un compresseur, une chambre de combustion et une turbine haute pression, ainsi qu'une turbine libre, caractérisé en ce que le procédé comprend les étapes suivantes :

- monter en parallèle et interposer entre ladite batterie d'accumulateurs et ledit démarreur à courant continu des premier et deuxième circuits, où le premier circuit comprend un convertisseur continu-continu monté en série avec un premier interrupteur et le deuxième circuit comprend un deuxième interrupteur,
- mesurer la vitesse de rotation du compresseur,
- mesurer la température à l'entrée de la turbine libre et
- commander lesdits premier et deuxième interrupteurs en fonction des informations de mesure de la vitesse de rotation du compresseur et de mesure de la température à l'entrée de la turbine libre.

De façon plus particulière, lors de l'initialisation du démarrage, on commande l'activation des accessoires de démarrage, simultanément on transmet audit convertisseur continu-continu une consigne de vitesse Nref correspondant à une fenêtre d'allumage préférentielle de la turbomachine et on ferme ledit premier interrupteur tout en activant le convertisseur continu-continu pour accélérer le compresseur, puis réguler la tension électrique délivrée au démarreur, afin de réguler l'acquisition de vitesse dudit compresseur à la consigne de vitesse Nref, lorsque ladite consigne de vitesse Nref est atteinte, on procède à l'allumage de la chambre de combustion de la turbomachine, on mesure la température à l'entrée de la turbine libre et après détection d'une élévation de température confirmant l'allumage de la chambre de combustion, on ferme le deuxième interrupteur, on ouvre le premier interrupteur et on désactive le convertisseur continu-continu, puis après détection du dépassement d'un seuil de fin de démarrage par la vitesse de rotation du compresseur, on désactive les accessoires de démarrage et on ouvre le deuxième interrupteur de manière à désactiver le démarreur.

L'invention s'applique tout particulièrement aux systèmes de démarrage de turbomoteurs d'aéronefs et notamment d'hélicoptères.

La présente invention prend en compte le fait que l'instant critique lors d'un démarrage de turbomachine est l'allumage de la chambre de combustion. Stabiliser la vitesse du générateur de gaz dans la fenêtre préférentielle d'allumage pendant une durée suffisante, jusqu'à la détection de l'allumage, permet ainsi d'éviter la plupart des causes d'allumage raté : couple démarreur mal maîtrisé, passage trop rapide dans la fenêtre d'allumage, délai de remplissage des tuyauteries de carburant, délai de propagation et de stabilisation de la flamme depuis les injecteurs d'allumage jusqu'aux injecteurs principaux à très basse température, etc...

Cette contrainte, qui ne s'applique qu'à des vitesses faibles de rotation du générateur de gaz (inférieures à 15%NG, où NG est la vitesse nominale du générateur), impose à l'avionneur de limiter le couple de démarrage sur toute la plage de vitesse, ce qui peut s'avérer handicapant dans les situations de démarrage imprégné à température très basse où le couple résistant du générateur de gaz est élevé, la tension d'alimentation du démarreur faible et l'allumage difficile.

Par contre, une fois la chambre allumée, les exigences de couple maximum et minimum relatives à l'accélération du générateur de gaz sont beaucoup moins contraignantes : il suffit que le couple soit suffisamment élevé pour assister le générateur de gaz jusqu'à la vitesse où la puissance récupérée sur la turbine Haute Pression permettra au générateur de gaz du turbomoteur d'accélérer par ses propres moyens, et pas trop élevé pour ne pas souffler la flamme. Dans cette seconde phase, un contrôle précis du démarreur en dNG/dt n'est pas impératif, ce qui est d'autant plus intéressant que la puissance demandée est alors beaucoup plus importante.

L'invention consiste donc en un dispositif, piloté par le calculateur du turbomoteur, permettant de mettre en vitesse le générateur de gaz du moteur et de le maintenir à une vitesse constante dans la fenêtre d'allumage du moteur, tant que l'allumage de la chambre de combustion du moteur n'est pas effectif. L'avantage principal est que la puissance nécessaire au maintien du générateur de gaz en rotation dans la fenêtre d'allumage est très réduite. A titre d'exemple, la puissance mécanique nécessaire pour maintenir en rotation dans sa fenêtre d'allumage le générateur de gaz d'un turbomoteur d'hélicoptère est de l'ordre de 1 à 3 kW, alors que la puissance maximale développée par le démarreur pendant la séquence de démarrage peut atteindre 5 à 20 kW, soit 5 à 7 fois plus. Ce boitier à base d'électronique de puissance est donc d'une taille et d'un coût très réduits par comparaison avec un système analogue dimensionné pour contrôler le démarreur sur toute la plage de vitesse de démarrage.

Une fois l'allumage détecté, le dispositif est shunté et le démarreur est directement alimenté depuis le réseau de bord de l'aéronef, typiquement de 28V, sans pilotage, la fcém du démarreur déjà en rotation au moment de la commutation permettant de réduire le courant de démarrage et d'effacer en grande partie le pic de courant constaté lorsque le générateur de gaz est initialement à l'arrêt.

Brève description des dessins

D'autres caractéristiques et avantages de l'invention ressortiront de la description suivante de modes particuliers de réalisation, donnés à titre d'exemples, en référence aux dessins annexés, sur lesquels :

La figure 1 est une vue schématique d'ensemble d'un exemple de réalisation d'un dispositif de démarrage de turbomachine conformément à l'invention ;
La figure 2 est une vue plus détaillée d'un exemple de convertisseur continu-continu pouvant être inclus dans le dispositif selon l'invention illustré sur la figure 1 ;
La figure 3 est une vue schématique d'ensemble d'un premier exemple de réalisation d'un dispositif de démarrage de turbomachine conformément à l'invention, avec les circuits de commande ;
La figure 4 est une vue schématique d'une boucle d'asservissement correspondant au premier exemple de réalisation de la figure 3 ;
La figure 5 est une vue schématique d'ensemble d'un deuxième exemple de réalisation d'un dispositif de démarrage de turbomachine conformément à l'invention, avec les circuits de commande ;
La figure 6 est une vue schématique d'une boucle d'asservissement correspondant au deuxième exemple de réalisation de la figure 5 ;
La figure 7 est un schéma électrique correspondant à un dispositif de démarrage selon l'art antérieur ;
La figure 8 est un diagramme montrant diverses courbes donnant l'allure des valeurs maximales et minimales du couple démarreur en fonction de la vitesse de rotation pour différentes conditions de fonctionnement, permettant de garantir l'allumage de la chambre de combustion dans le domaine de vol ;
La figure 9 est un schéma électrique montrant l'insertion d'une résistance de démarrage selon l'art antérieur ;
Les figures 10 et 11 sont des schémas électriques d'un dispositif connu de démarrage à deux batteries connectées respectivement en parallèle et en série en fonction d'un seuil de vitesse ;
La figure 12 est un diagramme montrant une séquence de démarrage connue pilotée par calculateur ; et
La figure 13 est un schéma d'un dispositif connu de dispositif de démarrage d'un turbopropulseur utilisant un démarreur à courant alternatif alimenté par un convertisseur contrôlé continu-alternatif.

Description détaillée de modes de réalisation préférentiels

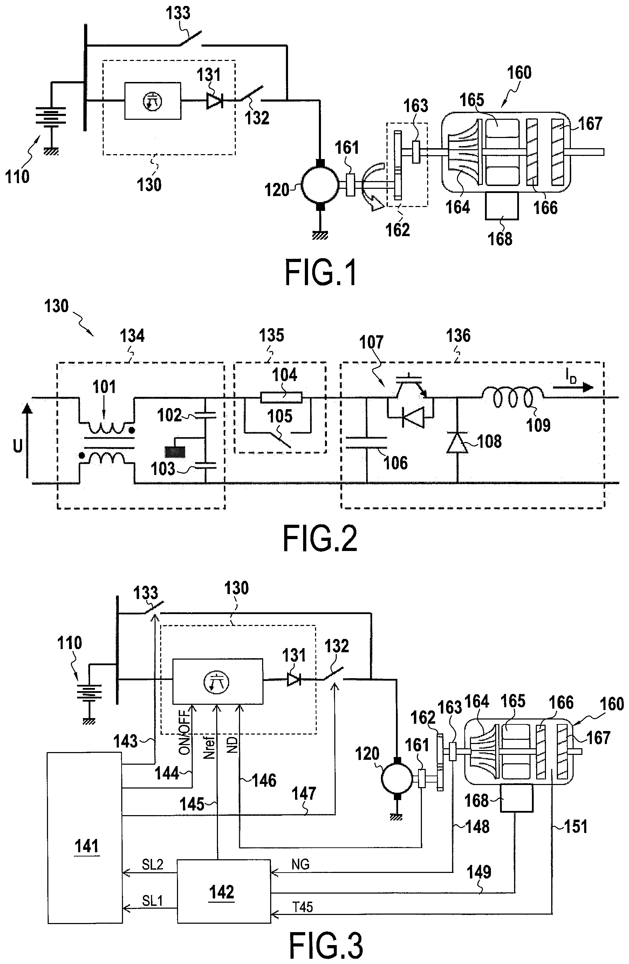

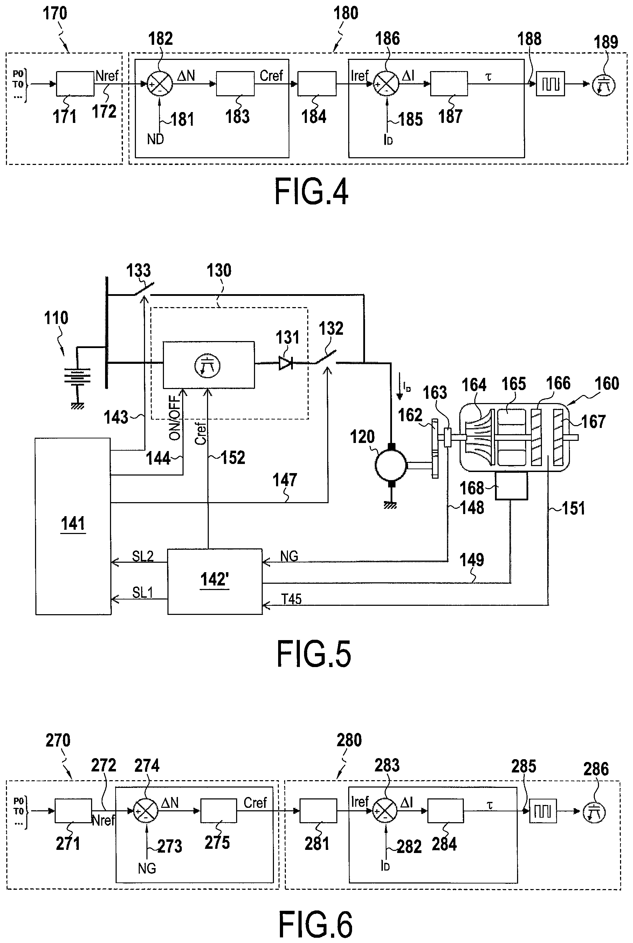

En figure 1, on a représenté schématiquement la configuration générale d'un dispositif selon l'invention.
Le système de démarrage fiabilisé d'une turbomachine comprend une batterie d'accumulateurs 110, qui peut être une batterie unique ou un groupe de batteries et peut être constituée par l'alimentation d'un réseau de bord d'un aéronef, par exemple à une tension de 28V, mais l'invention n'est pas limitée à une telle valeur.
Un démarreur à courant continu 120 peut être constitué par un simple démarreur à courant continu ou par un démarreur-générateur (GD) capable de fonctionner non seulement en mode moteur, mais également en mode générateur lorsque la phase de démarrage est terminée, par exemple afin d'alimenter un réseau de bord. Dans la suite de la description, le terme « démarreur » désigne indifféremment un simple démarreur et un démarreur-générateur, sauf indication contraire.
Le système de démarrage de turbomachine comprend un relais de transmission 162, avec notamment un réducteur pour assurer la transmission de mouvement entre le démarreur 120 et l'arbre principal de la turbomachine, ainsi que des équipements annexes, tels que des pompes associées aux injecteurs de carburant dans la chambre de combustion.
On voit encore sur la figure 1 les éléments principaux de la turbomachine avec un générateur de gaz 160 comprenant lui-même un compresseur 164, une chambre de combustion 165 et une turbine haute pression 166, ainsi qu'une turbine libre 167 et des accessoires de démarrage 168. On a également représenté sur la figure 1 un capteur 161 de la vitesse de rotation du démarreur 120 et un capteur 163 de la vitesse de rotation de l'arbre du compresseur 164 de la turbomachine.
Le système de démarrage selon l'invention comprend des premier et deuxième circuits montés en parallèle et interposés entre la batterie d'accumulateurs 110 et le démarreur à courant continu 120. Le premier circuit comprend un convertisseur continu-continu 130 monté en série avec un premier interrupteur 132 et de façon optionnelle une diode 131. Le deuxième circuit comprend un deuxième interrupteur 133.
Comme cela sera décrit plus loin en référence aux figures 3 et 5, le système comprend également d'autres capteurs de mesure du fonctionnement de la turbomachine, tels qu'un capteur 151 de la température à l'entrée de la turbine libre 167. La température T45 à l'entrée de la turbine libre 167 permet de fournir une information reflétant les conditions d'allumage dans la chambre de combustion 165. Il est donc possible d'utiliser à la place du capteur 151 tout autre type de capteur permettant de constater les conditions d'allumage dans la chambre de combustion 165.
Les premier et deuxième interrupteurs 132, 133 sont commandés à partir d'un circuit de commande 141 (Figures 3 et 5) en fonction des informations fournies par le capteur 163 de la vitesse de rotation du compresseur 164 et par le capteur 151 de la température à l'entrée de la turbine libre 167.

Un calculateur électronique de régulation 142, 142', qui peut être constitué par le calculateur électronique traditionnel de la turbomachine, encore dénommé EECU (figures 3 et 5), assure la gestion des mesures fournies par les capteurs 151 et 163 et la commande du convertisseur continu-continu 130 en coopération avec le circuit de commande 141, qui peut être un cœur électrique préexistant, tel qu'un module de gestion du réseau de bord d'un aéronef.

Le dispositif de démarrage selon l'invention est ainsi constitué essentiellement d'un convertisseur continu-continu (DC/DC) 130 alimentant, lorsque le contacteur 132 est fermé, le démarreur 120 au début de la phase de démarrage et fournissant la puissance nécessaire pour maintenir le générateur de gaz 160 dans la fenêtre d'allumage.

Lorsque l'allumage est confirmé, le contacteur 133 est fermé et le contacteur 132 est ouvert, de manière à alimenter sans interruption le démarreur 120 directement depuis la batterie 110 qui peut être intégrée à un réseau de bord, par exemple à 28V, pour la poursuite du démarrage de manière non pilotée.

Les interrupteurs 132 et 133 peuvent faire partie du « cœur électrique » de l'hélicoptère. La diode 131 n'est pas obligatoire mais elle peut cependant être utile afin de protéger la sortie du convertisseur continu-continu 130 lors du recouvrement de la commande des contacteurs 132 et 133.

Le convertisseur continu-continu 130 peut comprendre, par exemple, un simple hacheur dévolteur « buck » 136 (voir figure 2) qui, à partir de la tension d'alimentation du réseau U (par exemple 28V), délivre à l'induit du démarreur 120 le courant ID nécessaire pour réguler le couple du démarreur 120 et donc asservir la vitesse de rotation NG de l'arbre du compresseur 164 du générateur de gaz 160 à la consigne, indépendamment des conditions de fonctionnement (tension du réseau de bord, valeur des impédances de l'alimentation 110 et du démarreur 120, couple résistant du compresseur 164, etc...).

La puissance électrique nécessaire étant faible, le convertisseur continu-continu agit comme un système de démarrage progressif qui limite l'appel de courant sur le réseau de bord lors des premiers instants du démarrage, lorsque la fcém du démarreur 120 est quasi nulle. Cet aspect permet de diminuer les contraintes thermiques sur le démarreur 120, les contraintes mécaniques sur les cannelures et la section à casser de l'entraînement du démarreur 120 et, lors des démarrages sur la batterie 110 de l'hélicoptère, de diminuer la chute de tension constatée sur le réseau de bord lors de la mise sous tension du démarreur 120 à vitesse et fcém nulles.

La régulation de vitesse de la machine électrique nécessite un capteur de vitesse 161, qui peut soit faire partie du démarreur 120 lui-même (certains démarreurs-générateurs en sont équipés, notamment pour gérer le défluxage), soit être solidaire de l'entraînement du démarreur 120 (roue phonique, capteur à effet Hall ou autre).

La fenêtre d'allumage préférentielle étant susceptible de varier en fonction du domaine de vol (pression atmosphérique P0, température atmosphérique T0), il est souhaitable de pouvoir faire varier la consigne de vitesse Nref du convertisseur continu-continu 130, cette dernière étant élaborée par le calculateur 142 du turbomoteur et transmise au dispositif par une liaison 145 numérique ou analogique (ex. rapport cyclique variable), comme illustré sur la figure 3.

Le convertisseur continu-continu 130 peut comprendre, à titre d'exemple, comme représenté sur la figure 2, un filtre de compatibilité électromagnétique 134, avec des inductances 101 à fer couplées et des condensateurs 102, 103, suivi d'un circuit de précharge 135, avec une résistance 104 pouvant être shuntée par un commutateur 105, et un hacheur dévolteur de type «buck» 136, avec un condensateur 106, un interrupteur commandé 107 constitué par des composants semi-conducteurs de puissance, une diode 108 et une inductance 109, pour fournir en sortie un courant continu ID.

On décrira maintenant de façon plus détaillée le fonctionnement du système de démarrage selon l'invention, selon plusieurs variantes de réalisation en référence aux figures 3 à 6.

Lorsque l'on sélectionne le démarrage, le calculateur de régulation de la turbomachine (EECU) 142 envoie un signal logique SL1 au système de gestion du réseau de bord hélicoptère (cœur électrique) 141, active un électro-clapet de démarrage et les bougies d'allumage, et commande une loi de débit carburant adaptée au démarrage, par une ligne 149 de commande des accessoires de démarrage rassemblés symboliquement sur les figures 1, 3 et 5 sous le repère 168.

Simultanément, l'EECU 142 élabore en fonction de différents paramètres dont il assure l'acquisition (pression atmosphérique P0, température atmosphérique T0, température résiduelle T45, c'est-à-dire température des gaz à l'entrée de la turbine libre, etc...) la consigne de vitesse Nref correspondant à la fenêtre d'allumage préférentielle du turbomoteur, et transmet cette consigne au convertisseur continu-continu 130.

Sur activation du signal logique SL1, le cœur électrique 141 ferme le contacteur 132 (activation par la ligne 147) et transmet la consigne d'activation du convertisseur continu-continu 130 (activation du signal « ON/OFF » par la ligne 144).

Le convertisseur continu-continu 130 alimenté par le réseau de bord 110 se met en marche, accélère la rotation de l'arbre du compresseur 164 du générateur de gaz 160, puis régule le courant ID délivré au démarreur 120 de manière à réguler l'acquisition de vitesse de la machine tournante ND à la vitesse de consigne Nref.

Une fois que l'EECU 142 constate que la vitesse de rotation NG de l'arbre du compresseur 164 du générateur de gaz 160, mesurée par le capteur 163 et fournie à l'EECU par la ligne 148, a atteint et s'est stabilisée à la vitesse de consigne Nref, le calculateur électronique de régulation 142 procède à l'allumage de la turbomachine en envoyant les informations de commande requises sur la ligne 149 de commande des accessoires de démarrage.

Lorsque l'EECU 142 détecte et confirme l'allumage de la chambre de combustion, par exemple par mesure de l'élévation du T45 par la ligne 151, il envoie un signal logique SL2 au système de gestion du réseau de bord hélicoptère 141, puis désactive le signal logique SL1.

Sur activation du signal logique SL2, le cœur électrique 141 ferme le contacteur 133 (activation par la ligne 143) : le démarreur 120, alimenté directement depuis le réseau de bord 110, poursuit l'accélération et le démarrage de la turbomachine de manière conventionnelle. Simultanément, la diode 131 se bloque en inverse, ce qui permet d'éviter le court-circuit de la sortie du convertisseur continu-continu 130.

Il est à noter que le recouvrement de la commande des contacteurs 132 et 133, rendu possible par la diode 131, permet de garantir l'absence de toute discontinuité dans l'alimentation électrique du démarreur 120.

Sur désactivation du signal logique SL1, le cœur électrique 141 ouvre le contacteur 132 (désactivation du signal transmis par la ligne 147), ce qui isole la sortie du convertisseur continu-continu 130 du démarreur 120, et transmet la consigne de désactivation du convertisseur continu-continu 130 (désactivation du signal « ON/OFF » sur la ligne 144).

Lorsque l'EECU 142 détecte que la vitesse NG de l'arbre du compresseur 164 du générateur de gaz 160 dépasse le seuil de fin de démarrage (seuil à partir duquel le turbomoteur devient autonome), il désactive les accessoires de démarrage 168 par la ligne 149, ainsi que le signal logique SL2.

Sur désactivation du signal logique SL2, le cœur électrique 141 ouvre le contacteur 133 (désactivation du signal de commande par la ligne 143), ce qui coupe l'alimentation électrique du démarreur 120.

Au-dessus d'un seuil de vitesse, le démarreur-générateur 120 peut être commuté en mode générateur de manière à alimenter le réseau de bord 110, mais cette fonction ne peut pas être accomplie s'il s'agit d'un simple démarreur.

Du point de vue de la commande du convertisseur continu-continu 130, on trouve de manière classique deux boucles de régulation imbriquées : asservissement de vitesse puis asservissement de couple ou de courant (voir les figures 4 et 6).

La consigne de vitesse correspondant à la fenêtre d'allumage idéale de la turbomachine, Nref, délivrée par la ligne 172, est élaborée par l'EECU 170 de la turbomachine dans le bloc 171 en fonction de paramètres dont l'EECU 170 assure l'acquisition (par exemple et de manière non exhaustive: pression atmosphérique P0, température d'air en entrée compresseur TO...), puis transmise au système de contrôle 180 du convertisseur continu-continu 130 de manière numérique ou analogique.

La mesure de vitesse de la machine tournante ND effectuée par le capteur 161 et transmise par la ligne 146 (figure 3) ou 181 (figure 4) est comparée à la consigne Nref dans le comparateur 182 pour donner une erreur de vitesse ΔN, laquelle est traitée par le correcteur 183 pour donner une consigne de couple Cref. Cette consigne de couple est traitée par le bloc 184 qui la transforme en une consigne de courant Iref. La mesure du courant ID en sortie du convertisseur continu-continu 130, est comparée à la référence Iref dans le comparateur 186 pour donner une erreur ΔI, laquelle est traitée par le correcteur 187 pour donner une consigne 188 de rapport cyclique de conduction T qui sert à commander le(s) semiconducteur(s) de puissance 189 (figure 4) ou 107 (figure 2) du hacheur du convertisseur continu-continu 130.

Dans un autre mode de réalisation, légèrement différent, illustré sur les figures 5 et 6, la boucle d'asservissement de la vitesse est cette fois calculée par l'EECU 270. La consigne de vitesse Nref fournie en entrée 272 d'un comparateur 274 est élaborée par l'EECU 270 de la même manière que précédemment, dans un bloc 271 qui est analogue au bloc 171 de la figure 4, mais elle est comparée à la mesure de vitesse NG de rotation de l'arbre du compresseur 164 du générateur de gaz 160 (qui est proportionnelle à la vitesse de rotation ND du démarreur 120), fournie sur l'entrée 273 du comparateur 274 de manière à élaborer la consigne de couple Cref, laquelle est transmise par l'EECU 270 au circuit de contrôle 280 du convertisseur continu-continu 130. Cette consigne de couple Cref est traitée par le circuit de contrôle 280 du convertisseur continu-continu 130 de la même manière que dans le mode de réalisation précédent de la figure 4, les éléments 281 à 286 de la figure 6 correspondant aux éléments 184 à 189 de la figure 4 respectivement et n'étant pas décrits à nouveau, pour aboutir à la commande des semi-conducteurs 286 du hacheur.

On voit que l'un des avantages de ce mode de réalisation est qu'il permet de se passer de capteur de vitesse 161 sur le démarreur 120, la boucle de vitesse étant traitée directement au niveau du calculateur du turbomoteur grâce à l'acquisition de vitesse du générateur de gaz NG réalisée grâce au capteur 163.

D'une façon générale, l'invention concerne à la fois un système et un procédé de démarrage fiabilisé d'une turbomachine.

Le procédé de démarrage fiabilisé d'une turbomachine comprenant une batterie d'accumulateurs 110, un démarreur à courant continu 120, un calculateur électronique de régulation 142, 142', un relais de transmission 162, des accessoires de démarrage 168, un générateur de gaz 160 comprenant lui-même un compresseur 164, une chambre de combustion 165 et une turbine haute pression 166, ainsi qu'une turbine libre 167, comprend les étapes suivantes :

- monter en parallèle et interposer entre la batterie d'accumulateurs 110 et le démarreur à courant continu 120 des premier et deuxième circuits, où le premier circuit comprend un convertisseur continu-continu 130 monté en série avec un premier interrupteur 132 et le deuxième circuit comprend un deuxième interrupteur 133,

- mesurer la vitesse de rotation du compresseur 164,

- mesurer la température à l'entrée de la turbine libre 167 et

- commander lesdits premier et deuxième interrupteurs 132, 133 en fonction des informations de mesure de la vitesse de rotation du compresseur 164 et de mesure de la température à l'entrée de la turbine libre 167.

De façon plus particulière, lors de l'initialisation du démarrage, on commande l'activation des accessoires de démarrage 168, simultanément on transmet au convertisseur continu-continu 130 une consigne de vitesse Nref correspondant à une fenêtre d'allumage préférentielle de la turbomachine et on ferme le premier interrupteur 132, tout en activant le convertisseur continu-continu 130 pour accélérer le compresseur 164, puis réguler la tension électrique délivrée au démarreur 120, afin de réguler l'acquisition de vitesse du compresseur 164 à la consigne de vitesse Nref. Lorsque la consigne de vitesse Nref est atteinte, on procède à l'allumage de la chambre de combustion 165 de la turbomachine, on mesure la température à l'entrée de la turbine libre 167 et après détection d'une élévation de température confirmant l'allumage de la chambre de combustion 165, on ferme le deuxième interrupteur 133, on ouvre le premier interrupteur 132 et on désactive le convertisseur continu-continu 130, puis après détection du dépassement d'un seuil de fin de démarrage par la vitesse de rotation du compresseur, on désactive les accessoires de démarrage 168 et on ouvre le deuxième interrupteur 133.

Le procédé et le système de démarrage fiabilisé selon l'invention présentent de nombreux avantages.

Ils permettent de réduire le nombre de démarrages avortés par défaut d'allumage ou soufflage de la flamme dans la chambre de combustion du générateur de gaz de la turbomachine.

Ils permettent de rendre le démarrage plus robuste par rapport aux conditions de démarrage (domaine de vol, température d'huile, tension d'alimentation du démarreur, etc...).

Ils permettent de minimiser les dispersions sur la durée des démarrages.

Ils permettent donc d'éviter des ventilations entre un démarrage avorté et une nouvelle tentative, et par voie de conséquence permettent de diminuer la taille et la masse de la batterie embarquée.

Ils simplifient le travail de l'avionneur pour concevoir l'alimentation électrique du démarreur, afin de respecter le gabarit de couple de démarrage maximum imposé.

Ils permettent une limitation du courant d'appel lors du démarrage à vitesse nulle, ce qui permet de minimiser l'usure des balais du démarreur-générateur, de minimiser les contraintes sur l'accouplement (cannelures, section à casser), de diminuer la chute de tension du réseau de bord et d'optimiser le dimensionnement de la batterie.

Il s'ensuit une meilleure disponibilité des hélicoptères, compte tenu de la diminution du taux de démarrage avortés.

Par la réduction de la puissance du dispositif, on réduit également la masse et le coût par rapport à un convertisseur statique dimensionné pour la pleine puissance de démarrage (environ 15% de la puissance maximum de démarrage).

Le système selon l'invention est compatible avec la plupart des démarreurs-générateurs et démarreurs 28V à balais actuels utilisés sur hélicoptère.

L'invention n'est pas limitée aux modes de réalisation décrits, mais s'étend à toutes les variantes entrant dans le cadre des revendications.

Ainsi, par exemple, le dispositif comprenant le convertisseur continu-continu piloté 130 peut être implanté par un avionneur directement dans le cœur électrique 141, sous réserve que l'on connaisse les spécifications du moteur comprenant d'une part, les besoins en termes de performances (couple, vitesse), d'autre part, les interfaces (format de transmission de la consigne de vitesse au dispositif).

**Revendications**

1. Système de démarrage fiabilisé d'une turbomachine comprenant une batterie d'accumulateurs (110), un démarreur à courant continu (120), un calculateur électronique de régulation (142, 142'), un relais de transmission (162), des accessoires de démarrage (168) chargés de gérer une distribution de combustible à des injecteurs et un allumage de ce combustible pendant une phase de démarrage, un générateur de gaz (160) comprenant un compresseur (164), une chambre de combustion (165) et une turbine haute pression (166), ainsi qu'une turbine libre (167), **caractérisé en ce que** le système comprend en outre des premier et deuxième circuits montés en parallèle et interposés entre ladite batterie d'accumulateurs (110) et ledit démarreur à courant continu (120), **en ce que** le premier circuit comprend un convertisseur continu-continu (130) monté en série avec un premier interrupteur (132)

et le deuxième circuit comprend un deuxième interrupteur (133), **en ce qu'**il comprend en outre au moins un capteur (163) de la vitesse de rotation du compresseur (164), un capteur (151) de la température à l'entrée de la turbine libre (167) et un circuit (141) de commande desdits premier et deuxième interrupteurs (132, 133) en fonction des informations fournies par ledit capteur (163) de la vitesse de rotation du compresseur (164) et par ledit capteur (151) de la température à l'entrée de la turbine libre (167) .

2. Système de démarrage selon la revendication 1, **caractérisé en ce qu'**il comprend en outre une diode (131) montée dans le premier circuit en série avec le convertisseur continu-continu (130) et le premier interrupteur (132).

3. Système de démarrage selon la revendication 1 ou la revendication 2, **caractérisé en ce que** le démarreur à courant continu (120) est du type démarreur-générateur.

4. Système de démarrage selon l'une quelconque des revendications 1 à 3, **caractérisé en ce qu'**il comprend en outre un capteur (161) de la vitesse de rotation du démarreur à courant continu (120) et **en ce que** le convertisseur continu-continu (130) est configuré pour être asservi par ledit capteur (161) de la vitesse de rotation du démarreur à courant continu (120) lorsque ledit premier interrupteur (132) est fermé.

5. Système de démarrage selon l'une quelconque des revendications 1 à 3, **caractérisé en ce que** le convertisseur continu-continu (130) est configuré pour être asservi par ledit capteur (163) de la vitesse de rotation du compresseur lorsque ledit premier interrupteur (132) est fermé.

6. Système de démarrage selon l'une quelconque des revendications 1 à 5, **caractérisé en ce que** le convertisseur continu-continu (130) comprend un filtre (134) de compatibilité électromagnétique, un circuit de précharge (135) et un hacheur dévolteur (136) de type Buck.

7. Système de démarrage selon la revendication 4, **caractérisé en ce que** le calculateur électronique de régulation (142) comprend une unité d'élaboration d'une consigne de vitesse Nref correspondant à une fenêtre d'allumage préférentielle de la turbomachine et une liaison (145) de transmission de cette consigne de vitesse Nref au convertisseur continu-continu (130).

8. Système de démarrage selon la revendication 5, **caractérisé en ce que** le calculateur électronique de régulation (142') comprend une unité d'élaboration d'une consigne de vitesse Nref correspondant à une fenêtre d'allumage préférentielle de la turbomachine, et une unité d'élaboration d'une consigne de couple Cref et une liaison (152) de transmission de cette consigne de couple Cref au convertisseur continu-continu (130).

9. Système de démarrage selon l'une quelconque des revendications 1 à 8, **caractérisé en ce que** le calculateur électronique de régulation (142, 142') comprend une unité d'élaboration de signaux logiques SL1, SL2 appliqués à une unité (141) de gestion de réseau de bord d'un hélicoptère pour commander l'actionnement respectivement des premier et deuxième interrupteurs (132, 133).

10. Système de démarrage selon l'une quelconque des revendications 1 à 9, **caractérisé en ce que** le calculateur électronique de régulation (142, 142') comprend une unité de détection du dépassement d'un seuil prédéterminé de la vitesse de rotation NG du compresseur et de commande de désactivation des premier et deuxième interrupteurs (132, 133) ainsi que de désactivation des accessoires de démarrage (168).

11. Système de démarrage selon l'une quelconque des revendications 1 à 10, **caractérisé en ce qu'**il comprend un circuit de commande du convertisseur continu-continu (130) qui comprend à la fois une boucle d'asservissement de vitesse et une boucle d'asservissement de courant.

12. Système de démarrage selon les revendications 4 et 11, **caractérisé en ce que** ladite boucle d'asservissement de vitesse et ladite boucle d'asservissement de courant sont incorporées dans un circuit indépendant de contrôle du convertisseur continu-continu (130).

13. Système de démarrage selon les revendications 5 et 11, **caractérisé en ce que** ladite boucle d'asservissement de vitesse est incorporée dans ledit calculateur électronique de régulation (142') et ladite boucle d'asservissement de courant est incorporée dans un circuit indépendant de contrôle du convertisseur continu-continu (130).

14. Procédé de démarrage fiabilisé d'une turbomachine comprenant une batterie d'accumulateurs (110), un démarreur à courant continu (120), un calculateur électronique de régulation (142, 142'), un relais de transmission (162), des accessoires de démarrage (168) chargés de gérer une distribution de combustible à des injecteurs et un allumage de ce combustible pendant une phase de démarrage, un générateur de gaz (160) comprenant lui-même un compresseur (164), une chambre de combustion (165) et une turbine haute pression (166), ainsi qu'une turbine libre (167), **caractérisé en ce que** le procédé comprend les étapes suivantes :

- monter en parallèle et interposer entre ladite batterie d'accumulateurs (110) et ledit démarreur à courant continu (120) des premier et deuxième circuits, où le premier circuit comprend un convertisseur continu-continu (130) monté en série avec un premier interrupteur (132) et le deuxième circuit comprend un deuxième interrupteur (133),
- mesurer la vitesse de rotation du compresseur (164),
- mesurer la température à l'entrée de la turbine libre (167) et
- commander lesdits premier et deuxième interrupteurs (132, 133) en fonction des informations de mesure de la vitesse de rotation du compresseur (164) et de mesure de la température à l'entrée de la turbine libre (167).

15. Procédé de démarrage selon la revendication 14, **caractérisé en ce que** lors de l'initialisation du démarrage, on commande l'activation des accessoires de démarrage (168), simultanément on transmet audit convertisseur continu-continu (130) une consigne de vitesse Nref correspondant à une fenêtre d'allumage préférentielle de la turbomachine et on ferme ledit premier interrupteur (132) tout en activant le convertisseur continu-continu (130) pour accélérer le compresseur (164) puis réguler la tension électrique délivrée au démarreur (120) afin de réguler l'acquisition de vitesse dudit compresseur (164) à la consigne de vitesse Nref, lorsque ladite consigne de vitesse Nref est atteinte, on procède à l'allumage de la chambre de combustion (165) de la turbomachine, on mesure la température à l'entrée de la turbine libre (167) et après détection d'une élévation de température confirmant l'allumage de la chambre de combustion (165), on ferme le deuxième interrupteur (133), on ouvre le premier interrupteur (132) et on désactive le convertisseur continu-continu (130), puis après détection du dépassement d'un seuil de fin de démarrage par la vitesse de rotation du compresseur, on désactive les accessoires de démarrage (168) et on ouvre le deuxième interrupteur (133).

16. Système de démarrage selon l'une quelconque des revendications 1 à 13, **caractérisé en ce qu'**il est installé dans un turbomoteur d'aéronef.

## Patentansprüche

1. System zum zuverlässiger gestalteten Starten einer Turbomaschine, umfassend eine Akkumulatoren-Batterie (110), einen Gleichstromstarter (120), eine elektronische Steuereinheit (142, 142'), ein Übertragungsrelais (162), Startzubehör (168), das das Steuern einer Verteilung von Treibstoff zu Einspritzdüsen und einer Zündung dieses Treibstoffs während einer Startphase übernimmt, einen Gasgenerator (160), der einen Kompressor (164), eine Brennkammer (165) und eine Hochdruckturbine (166) umfasst, sowie eine Freilaufturbine (167), **dadurch gekennzeichnet, dass** das System ferner einen ersten und einen zweiten Kreis umfasst, die parallel geschaltet und zwischen der Akkumulatoren-Batterie (110) und dem Gleichstromstarter (120) angeordnet sind, dass der erste Kreis einen DC/DC-Wandler (130) umfasst, der mit einem ersten Schalter (132) in Reihe geschaltet ist, und der zweite Kreis einen zweiten Schalter (133) umfasst, dass es ferner wenigstens einen Sensor (163) für die Drehzahl des Kompressors (164), einen Sensor (151) für die Temperatur am Einlass der Freilaufturbine (167) und einen Kreis (141) zum Steuern des ersten und des zweiten Schalters (132, 133) in Abhängigkeit von den Informationen, die durch den Sensor (163) für die Drehzahl des Kompressors (164) und durch den Sensor (151) für die Temperatur am Einlass der Freilaufturbine (167) bereitgestellt werden, umfasst.

2. Startsystem nach Anspruch 1, **dadurch gekennzeichnet, dass** es ferner eine Diode (131) umfasst, die in dem ersten Kreis in Reihe mit dem DC/DC-Wandler (130) und dem ersten Schalter (132) geschaltet ist.

3. Startsystem nach Anspruch 1 oder Anspruch 2, **dadurch gekennzeichnet, dass** der Gleichstromstarter (120) vom Starter-Generator-Typ ist.

4. Startsystem nach einem der Ansprüche 1 bis 3, **dadurch gekennzeichnet, dass** es ferner einen Sensor (161) für die Drehzahl des Gleichstromstarters (120) umfasst und dass der DC/DC-Wandler (130) dazu ausgelegt ist, durch den Sensor (161) für die Drehzahl des Gleichstromstarters (120) gesteuert zu werden, wenn der erste Schalter (132) geschlossen ist.

**5.** Startsystem nach einem der Ansprüche 1 bis 3, **dadurch gekennzeichnet, dass** der DC/DC-Wandler (130) dazu ausgelegt ist, durch den Sensor (163) für die Drehzahl des Kompressors gesteuert zu werden, wenn der erste Schalter (132) geschlossen ist.

**6.** Startsystem nach einem der Ansprüche 1 bis 5, **dadurch gekennzeichnet, dass** der DC/DC-Wandler (130) ein elektromagnetisches Verträglichkeit-Filter (134), eine Vorladeschaltung (135) und einen Abwärts-Zerhacker (136) vom Buck-Typ umfasst.

**7.** Startsystem nach Anspruch 4, **dadurch gekennzeichnet, dass** die elektronische Steuereinheit (142) eine Einheit zum Erstellen eines Geschwindigkeits-Sollwertes Nref, der einem bevorzugten Fenster zum Zünden der Turbomaschine entspricht, sowie eine Verbindung (145) zum Übertragen dieses Geschwindigkeits-Sollwertes Nref an den DC/DC-Wandler (130) umfasst.

**8.** Startsystem nach Anspruch 5, **dadurch gekennzeichnet, dass** die elektronische Steuereinheit (142') eine Einheit zum Erstellen eines Geschwindigkeits-Sollwertes Nref, der einem bevorzugten Fenster zum Zünden der Turbomaschine entspricht, sowie eine Einheit zum Erstellen eines Drehmoment-Sollwertes Cref und eine Verbindung (152) zum Übertragen dieses Drehmoment-Sollwertes Cref an den DC/DC-Wandler (130) umfasst.

**9.** Startsystem nach einem der Ansprüche 1 bis 8, **dadurch gekennzeichnet, dass** die elektronische Steuereinheit (142, 142 ') eine Einheit zum Erzeugen von Logik-Signalen SL1, SL2 umfasst, die an eine Einheit (141) zum Verwalten eines BordNetzes eines Hubschraubers angelegt werden, um die Betätigung des ersten bzw. des zweiten Schalters (132, 133) zu steuern.

**10.** Startsystem nach einem der Ansprüche 1 bis 9, **dadurch gekennzeichnet, dass** die elektronische Steuereinheit (142, 142') eine Einheit zum Erfassen des Überschreitens eines vorbestimmten Schwellwertes der Drehzahl NG des Kompressors und zum Steuern eines Deaktivierens des ersten und des zweiten Schalters (132, 133) sowie eines Deaktivierens des Startzubehörs (168) umfasst.

**11.** Startsystem nach einem der Ansprüche 1 bis 10, **dadurch gekennzeichnet, dass** es eine Schaltung zur Steuerung des DC/DC-Wandlers (130) umfasst, die sowohl einen Geschwindigkeits-Regelkreis als auch einen Strom-Regelkreis umfasst.

**12.** Startsystem nach den Ansprüchen 4 und 11, **dadurch gekennzeichnet, dass** der Geschwindigkeits-Regelkreis und der Strom-Regelkreis in eine unabhängige Schaltung zur Steuerung des DC/DC-Wandlers (130) eingefügt sind.

**13.** Startsystem nach den Ansprüchen 5 und 11, **dadurch gekennzeichnet, dass** der Geschwindigkeits-Regelkreis in die elektronische Steuereinheit (142') eingefügt ist und der Strom-Regelkreis in eine unabhängige Schaltung zur Steuerung des DC/DC-Wandlers (130) eingefügt ist.

**14.** Verfahren zum zuverlässiger gestalteten Starten einer Turbomaschine, umfassend eine Akkumulatoren-Batterie (110), einen Gleichstromstarter (120), eine elektronische Steuereinheit (142, 142'), ein Übertragungsrelais (162), Startzubehör (168), das das Steuern einer Verteilung von Treibstoff zu Einspritzdüsen und einer Zündung dieses Treibstoffs während einer Startphase übernimmt, einen Gasgenerator (160), der selbst einen Kompressor (164), eine Brennkammer (165) und eine Hochdruckturbine (166) umfasst, sowie eine Freilaufturbine (167), **dadurch gekennzeichnet, dass** das Verfahren die folgenden Schritte umfasst:

- einen ersten und einen zweiten Kreis parallel schalten und zwischen der Akkumulatoren-Batterie (110) und dem Gleichstromstarter (120) einfügen, wobei der erste Kreis einen DC/DC-Wandler (130) umfasst, der mit einem ersten Schalter (132) in Reihe geschaltet ist, und der zweite Kreis einen zweiten Schalter (133) umfasst,
- die Drehzahl des Kompressors (164) messen,
- die Temperatur am Einlass der Freilaufturbine (167) messen, und
- den ersten und den zweiten Schalter (132, 133) in Abhängigkeit von den Informationen des Messens der Drehzahl des Kompressors (164) und des Messens der Temperatur am Einlass der Freilaufturbine (167) steuern.

**15.** Startverfahren nach Anspruch 14, **dadurch gekennzeichnet, dass** während der Initialisierung des Starts die Aktivierung des Startzubehörs (168) gesteuert wird, gleichzeitig ein Geschwindigkeits-Sollwert Nref, der einem bevorzugten Fenster zum Zünden der Turbomaschine entspricht, an den DC/DC-Wandler (130) übertragen wird, und der erste Schalter (132) geschlossen wird, während der DC/DC-Wandler (130) aktiviert wird, um den Kompressor (164) zu beschleunigen, anschließend die an den Starter (120) gelieferte elektrische Spannung zu regulieren, um die Geschwindigkeitserfassung des Kompressors (164) auf den Geschwindigkeits-Sollwert Nref zu regeln, wenn der Geschwindigkeits-Sollwert Nref erreicht ist, die Brennkammer (165) der Turbomaschine gezündet wird, die Temperatur am Einlass der Freilaufturbine (167) gemessen wird, und nach Feststellen eines Temperaturanstiegs, der die Zündung der Brennkammer (165) bestätigt, der zweite Schalter (133) geschlossen wird, der erste Schalter (132) geöffnet wird und der DC/DC-Wandler (130) deaktiviert wird, anschließend, nachdem erfasst wurde, dass die Kompressordrehzahl einen Startende-Schwellwert überschritten hat, das Startzubehör (168) deaktiviert wird und der zweite Schalter (133) geöffnet wird.

16. Startsystem nach einem der Ansprüche 1 bis 13, **dadurch gekennzeichnet, dass** es in einen Turbomotor eines Flugzeugs eingebaut ist.

**Claims**

1. A starting system for reliably starting a turbine engine comprising a storage battery (110), a DC starter (120), an electronic regulation computer (142, 142'), a transmission gearbox (162), starting accessories (168) for managing the distribution of fuel to injectors and for igniting the fuel during a starting stage, a gas generator (160) itself comprising a compressor (164), a combustion chamber (165), and a high pressure turbine (166), together with a free turbine (167), the system being **characterized in that** it further comprises first and second circuits connected in parallel and arranged between said storage battery (110) and said DC starter (120), **in that** the first circuit comprises a DC-DC converter (130) connected in series with a first switch (132) and the second circuit comprises a second switch (133), and **in that** it further comprises at least a sensor (163) for sensing the speed of rotation of the compressor (164), a sensor (151) for sensing the temperature at the inlet to the free turbine (167), and a control circuit (141) for controlling said first and second switches (132, 133) as a function of information supplied by said sensor (163) for sensing the speed of rotation of the compressor (164) and by said sensor (151) for sensing the inlet temperature of the free turbine (167).

2. A starting system according to claim 1, **characterized in that** it further includes a diode (131) connected in the first circuit in series with the DC-DC converter (130) and the first switch (132).

3. A starting system according to claim 1 or claim 2, **characterized in that** the DC starter (120) is of the starter-generator type.

4. A starting system according to any one of claims 1 to 3, **characterized in that** it further comprises a sensor (161) for sensing the speed of rotation of the DC starter (120) and **in that** the DC-DC converter (130) is configured to be servo-controlled by the sensor (161) for sensing the speed of rotation of the DC starter (120) when said first switch (132) is closed.

5. A starting system according to any one of claims 1 to 3, **characterized in that** the DC-DC converter (130) is configured to be servo-controlled by said sensor (163) for sensing the speed of rotation of the compressor when said first switch (132) is closed.

6. A starting system according to any one of claims 1 to 5, **characterized in that** the DC-DC converter (130) includes an electromagnetic compatibility filter (134), a pre-load circuit (135), and a buck type chopper (136).

7. A starting system according to claim 4, **characterized in that** the electronic regulation computer (142) includes a unit for preparing a speed setpoint Nref corresponding to a preferred ignition window of the turbine engine and a transmission link (145) for transmitting the speed setpoint Nref to the DC-DC converter (130).

8. A starting system according to claim 5, **characterized in that** the electronic regulation computer (142') includes a unit for preparing a speed setpoint Nref corresponding to a preferred ignition window of the turbine engine, a unit for preparing a torque setpoint Cref, and a transmission link (152) for transmitting the torque setpoint Cref to the DC-DC converter (130).

9. A starting system according to any one of claims 1 to 8, **characterized in that** the electronic regulation computer (142, 142') includes a unit for preparing respective logic signals SL1, SL2 that are applied to a unit (141) for managing the on-board network of a helicopter to actuate the first and second switches (132, 133) .

**10.** A starting system according to any one of claims 1 to 9, **characterized in that** the electronic regulation computer (142, 142') includes a unit for detecting that the speed of rotation NG of the compressor has exceeded a predetermined threshold and for deactivating the first and second switches (132, 133) and also for deactivating the starting accessories (168).

**11.** A starting system according to any one of claims 1 to 10, **characterized in that** it includes a control circuit for the DC-DC converter (130), which control circuit comprises both a speed servo-control loop and a current servo-control loop.

**12.** A starting system according to claims 4 and 11, **characterized in that** said speed servo-control loop and said current servo-control loop are incorporated in an independent controller circuit for controlling the DC-DC converter (130).

**13.** A starting system according to claims 5 and 11, **characterized in that** said speed servo-control loop is incorporated in said electronic regulation computer (142') and said current servo-control loop is incorporated in an independent controller circuit for controlling the DC-DC converter (130).

**14.** A starting method for reliably starting a turbine engine comprising a storage battery (110), a DC starter (120), an electronic regulation computer (142, 142'), a transmission gearbox (162), starting accessories (168) for managing the distribution of fuel to injectors and for igniting the fuel during a starting stage, a gas generator (160) itself comprising a compressor (164), a combustion chamber (165), and a high pressure turbine (166), together with a free turbine (167), the method being **characterized in that** it comprises the following steps:

- connecting first and second circuits in parallel and interposing them between said storage battery (110) and said DC starter (120), the first circuit comprising a DC-DC converter (130) connected in series with a first switch (132), and the second circuit comprising a second switch (133);
- measuring the speed of rotation of the compressor (164) ;
- measuring the temperature at the inlet of the free turbine (167); and
- controlling said first and second switches (132, 133) as a function of measurement information concerning the speed of rotation of the compressor (164) and the temperature at the inlet of the free turbine (167).

**15.** A starting method according to claim 14, **characterized in that** when initializing starting, the starting accessories (168) are activated and simultaneously a speed setpoint Nref is transmitted to said DC-DC converter (130), the speed setpoint corresponding to a preferred ignition window of the turbine, and said first switch (132) is closed while activating the DC-DC converter (130) to accelerate the compressor (164) and then to regulate the voltage delivered to the starter (120) so as to regulate the acquisition of speed by said compressor (164) to the speed setpoint Nref, and when said speed setpoint Nref is reached, the combustion chamber (165) of the turbine engine is ignited, the temperature at the inlet of the free turbine (167) is measured, and once a rise in temperature is detected confirming that the combustion chamber (165) has ignited, the second switch (133) is closed, the first switch (132) is opened, and the DC-DC converter (130) is deactivated, and after detecting that the speed of rotation of the compressor has exceeded an end-of-starting threshold, the starting accessories (168) are deactivated and the second switch (133) is opened.

**16.** A starting system according to any one of claims 1 to 13, **characterized in that** it is applied to an aircraft turbine engine.

FIG.1

FIG.2

FIG.3

FIG.4

FIG.5

FIG.6

FIG.7

FIG.8

FIG.9
ART ANTERIEUR

FIG.10
ART ANTERIEUR

FIG.11
ART ANTERIEUR

FIG.12
ART ANTERIEUR

FIG.13
ART ANTERIEUR

**EP 3 092 389 B1**

## RÉFÉRENCES CITÉES DANS LA DESCRIPTION

### Documents brevets cités dans la description

- WO 20110563960 A
- CA 2685514
- GB 740090 A
- FR 2964515 A1
- US 2938338 A
- US 6147414 A
- US 20100283242 A
- US 5493201 A